# EUROPEAN PATENT SPECIFICATION

(11) **EP 0 866 794 B1**
(45) Date of publication and mention of the grant of the patent: **28.08.2002**
(21) Application number: 96940242.9
(22) Date of filing: 15.10.1996
(51) Int. Cl.: C07F 5/02

(54) **METHOD FOR THE PRODUCTION OF TETRAKIS (PENTAFLUOROPHENYL) BORATES**
VERFAREN ZUR HERSTELLUNG VON TETRAKIS(PENTAFLUOROPHENYL)BORATEN
PROCEDE DE PRODUCTION DE TETRAKIS (PENTAFLUOROPHENYLE) BORATES

(43) Date of publication of application: 30.09.1998
(73) Proprietor: BOULDER SCIENTIFIC COMPANY, Mead, CO 80542 (US)
(72) Inventor: KRAFFT, Terry, Longmont, CO 80503 (US)
(74) Representative: Hall, Marina
(86) International application number: US9616390
(87) International publication number: WO98016533

(56) References cited:
- US-A- 5 488 169
- US-A- 5 493 056

## Description

### FIELD OF INVENTION

This invention relates to the synthesis of tetrakis (pentafluorophenyl) borates by reaction of a tetrafluoroborate salt with a pentafluorophenyl compound.

### BACKGROUND OF THE INVENTION

It is known to produce tetrakis (pentafluorophenyl) borates by reaction of boron trihalide with pentafluorophenyl lithium or pentafluorophenyl magnesium halide and by reaction of tris (pentafluorophenyl) boron with pentafluorophenyl lithium. See generally, published European patent application No. 0 604 961 A2 and U.S. patent 5,473,036. Such borates are important intermediates in the synthesis of catalysts used in combination with metallocene polymerization catalysts.

### SUMMARY OF THE INVENTION

The invention provides a method for the production of tetrakis (pentafluorophenyl) borates by reacting a tetrafluoroborate salt with pentafluorophenyl magnesium halide in a non-interfering solvent.

### DETAILED DESCRIPTION OF THE INVENTION

Pentafluorophenyl magnesium halides (Grignards) are known. See, e.g., Respess, et al., J.Organometal.Chem. (1969) 18:263-274 and Respess, et al., J. Organometal. Chem. (1969) 19:191-195. Pentafluorophenyl magnesium halides useful in the invention have the formula C₆F₅MgX in which X is a halogen, e.g., iodine, chlorine or bromine, preferably bromine.

Tetrafluoroborate salts useful in the invention have the formula QBF₄ in which Q is an sodium, lithium or potassium, preferably sodium.

The reaction between the Grignard and the tetrafluoroborate salt may be conducted in any non-interfering solvent. Typical solvents have the formula R-O-R' in which the R and R' are the same or different aliphatic hydrocarbon groups having 2-10 carbon atoms. Ethyl ether is preferred. The reaction is appropriately conducted at a temperature of 0°C to 100°C, preferably at 30° to 35°C.

The tetrafluoroborate salt is added to the Grignard solution in stoichiometric amounts or in such greater or lesser amount as may be deemed appropriate.

Preferably the reaction mixture is refluxed to expedite the reaction.

### EXEMPLIFICATION OF THE INVENTION

### EXAMPLE I

A reaction vessel is charged with 0.25 mol of C₆H₅MgBr and 0.056 mol of Na B F₄ in an ethyl ether solvent. The reaction mixture is refluxed overnight under nitrogen. The reaction mixture was processed to recover of 24.4g of brown solids. Apparent yield 62.1%.

¹⁹F NMR peaks established the presence of tetrakis (pentafluorophenyl) borate in an amount corresponding to approximately 50% of the total product of the reaction.

### EXAMPLE II

Example I was repeated using Na BF₄ ground by pestle and mortar and a 36 hour reflux time. Yield: 62.2% of a product having a tetrakis (pentafluorophenyl) borate purity of about 60% as indicated by ¹⁹F NMR.

## Claims

1. A method for the production of tetrakis (pentafluorophenyl) borate which comprises reacting a pentafluorophenyl compound having the formula C₆F₅MgX in which X is a halide with an alkali metal salt of tetrafluoroborate in a non-interfering solvent.

2. The claim 1 method in which the pentafluorophenyl compound is C₆F₅MgBr and said alkali metal salt is NaBF₄.

3. The claim 1 or claim 2 method in which said solvent has the formula R-O-R' in which R and R' are the same or different aliphatic hydrocarbon groups having 2 to 10 carbon atoms.

4. The claim 1 or claim 2 method in which said solvent is ethyl ether.

5. A method which comprises reacting a compound having the formula C₆F₅MgX in which X is a halide with a compound having the formula QBF₄ in which Q is sodium, lithium or potassium
said reaction being conducted at a temperature of 0°C to 100°C in a solvent having the formula R-O-R' in which R and R' are the same or different aliphatic hydrocarbon groups having 2 to 10 carbon atoms to produce a reaction mixture containing a tetrakis (pentafluorophenyl) borate and
recovering said tetrakis (pentafluorophenyl) borate from said reaction mixture.

6. The claim 5 method in which C₆H₅ MgBr is reacted with NaBF₄ in ethyl ether.

## Patentansprüche

1. Verfahren zur Herstellung von Tetrakis(pentafluorphenyl)borat, umfassend die Umsetzung einer Pentafluorphenylverbindung der Formel C₆F₅MgX, worin X ein Halogenid bedeutet, mit einem Alkalimetallsalz des Tetrafluorborats in einem nicht-interferierenden Lösungsmittel.

2. Verfahren nach Anspruch 1, wobei die Pentafluorphenylverbindung C₆F₅MgBr ist und das Alkalimetallsalz NaBF₄ ist.

3. Verfahren nach Anspruch 1 oder 2, wobei das Lösungsmittel die Formel R-O-R' besitzt, worin R und R' gleiche oder unterschiedliche aliphatische Kohlenwasserstoffgruppen mit 2 bis 10 Kohlenstoffatomen bedeuten.

4. Verfahren nach Anspruch 1 oder 2, wobei das Lösungsmittel Ethylether ist.

5. Verfahren zur Umsetzung einer Verbindung der Formel C₆F₅MgX, worin X ein Halogenid bedeutet, mit einer Verbindung der Formel QBF₄, worin Q Natrium, Lithium oder Kalium bedeutet,
wobei die Reaktion bei einer Temperatur von 0°C bis 100°C in einem Lösungsmittel der Formel R-O-R' durchgeführt wird, worin R und R' gleiche oder unterschiedliche aliphatische Kohlenwasserstoffgruppen mit 2 bis 10 Kohlenstoffatomen bedeuten und wobei ein Reaktionsgemisch, das ein Tetrakis(pentafluorphenyl)borat enthält, gebildet wird, und
wobei das Tetrakis(pentafluorphenyl) aus dem Reaktionsgemisch gewonnen wird.

6. Verfahren nach Anspruch 5, worin C₆H₅MgBr mit NaBF₄ in Ethylether umgesetzt wird.

## Revendications

1. Procédé pour la production de tétrakis(pentafluorophényl)borate, qui comprend la réaction d'un composé pentafluorophényle de formule C₆F₅MgX dans laquelle X est un halogénure avec un sel tétrafluoroborate de métal alcalin dans un solvant non interférant.

2. Procédé selon la revendication 1, dans lequel le composé pentafluorophényle est C₆F₅MgBr et ledit sel de métal alcalin est NaBF₄.

3. Procédé selon la revendication 1 ou la revendication 2, dans lequel ledit solvant répond à la formule R-O-R' dans laquelle R et R' sont des groupes hydrocarbonés aliphatiques identiques ou différents ayant de 2 à 10 atomes de carbone.

4. Procédé selon la revendication 1 ou la revendication 2, dans lequel ledit solvant est l'éthyléther.

5. Procédé qui comprend la réaction d'un composé de formule C₆F₅MgX dans laquelle X est un halogénure avec un composé de formule QBF₄ dans laquelle Q est le sodium, le lithium ou le potassium, ladite réaction étant mise en oeuvre à une température de 0°C à 100°C dans un solvant de formule R-O-R' dans laquelle R et R' sont des groupes hydrocarbonés aliphatiques identiques ou différents ayant de 2 à 10 atomes de carbone, pour produire un mélange réactionnel contenant un tétrakis(pentafluorophényl)borate, et la récupération dudit tétrakis(pentafluorophényl)borate à partir dudit mélange réactionnel.

6. Procédé selon la revendication 5, dans lequel on fait réagir du C₆H₅MgBr avec du NaBF₄ dans de l'éthyléther.
